Europäisches Patentamt

European Patent Office

Office européen des brevets

(19)

(11) Publication number: **0 107 448**
A2

# EUROPEAN PATENT APPLICATION

(12)

(21) Application number: **83306192.2**

(51) Int. Cl.³: **G 06 F 9/44**

(22) Date of filing: **13.10.83**

(30) Priority: **14.10.82 US 434382**

(43) Date of publication of application: **02.05.84 Bulletin 84/18**

(84) Designated Contracting States: **DE FR GB IT SE**

(71) Applicant: **Honeywell Information Systems Inc., 200 Smith Street, Waltham Massachusetts 02154 (US)**

(72) Inventor: **Circello, Joseph C., 3209 W. Mercer Lane, Phoenix Arizona 85029 (US)**
Inventor: **Wilhite, John Edward, 8225 N. 45th Avenue, Glendale Arizona 85302 (US)**
Inventor: **Trubisky, Leonard G., 6725 E. Horseshoe Lane, Scottsdale Arizona 85253 (US)**

(74) Representative: **Harman, Michael Godfrey et al, Honeywell Control Systems Ltd. Patent Department Charles Square, Bracknell Berkshire RG12 1EB (GB)**

(54) **Computer with multiple operating systems.**

(57) In a data processing system including a central processing unit capable of operation with a plurality of operating systems, a VMSM unit is described for producing a composite decor descriptor from a plurality of possible decor descriptor formats. The VMSM unit includes an input buffer unit 511 and an output buffer unit 515, a control unit 510 to analyze an incoming DATA and provide appropriate control signals, a reconfiguration unit 513 for reformatting the plurality of descriptor formats into a composite format, a descriptor fetch unit 512 for retrieving a descriptor when the signals applied to the VMSM unit contain a descriptor address, and a descriptor master copy unit 514 which contains a copy of the descriptors stored in the addressing apparatus.

0107448

-1-

COMPUTER WITH MULTIPLE OPERATING SYSTEMS

This invention relates to data processing system, and more particularly to systems capable of executing instructions from a plurality of operating systems.

Data processing systems are generally capable of utilization of a single operating system. Each operating system generally involves formation of addresses by different procedures. Furthermore, each operating system generally includes a number of attributes, contained in descriptors and which are related to address formation and other features of instruction execution, which are formatted differently and can describe different execution procedures.

In order to utilize a plurality of operating systems, it has been necessary in the past to provide the data processing unit with separate apparatus to respond to the instruction of each of the operating systems. The apparatus limited the flexibility in the changes that could be made in subsequent updates of the operating system.

Thus, there is a need for a data processing system that can share a plurality of operating systems, not only in a mode where different operating systems can utilize the central processing unit individually, but also in a mode where instructions from individual operating systems can be executed in an interleaved manner.

Accordingly the present invention provides in a data processing unit having a plurality of operating systems associated therewith, each of which requires a different decor, a central processing unit for executing instruction of said plurality of operating systems, characterized by:
means responsive to transfer of descriptors related to each operating systems for providing a composite descriptor;

addressing means responsive to the instructions and the composite descriptor for providing address formation compatible with each operating system;

paging means coupled to the addressing means for limiting access of a currently active system to preassigned portions of the memory unit; and

means responsive to each instruction for determining if it is permitted with the currently active operating system and signalling to the central processing unit when an unpermitted instruction is identified.

A data processing system embodying the invention will now be described, by way of example, with reference to the drawings, in which:

Fig.1 is a block diagram of a data processing system.

Fig.2 is a block central processing unit including a VMSM execution unit.

Fig.3 is the format of a typical instruction stored in the data processing unit memory units.

Fig.4A is a diagram of a typical basic decor decriptor format.

Fig.4B is a diagram of a typical virtual decor descriptor format.

Fig.4C is a diagram of a typical multics decor descriptor format.

Fig.4D is a diagram of. a typical composite decor descriptor format.

Fig. 5 is a block diagram of the principal components of the VMSM unit.

Fig.6A is a symbolic diagram of the addressing mechanism in the basic decor.

Fig.6B is a symbolic diagram of the addressing mechanism of the multics decor.

Fig.6C is a symbolic diagram of the addressing mechanism of the virtual decor.

Fig.6D is a symbolic diagram of the addressing mechanism
of the composite decor.

Fig. 7 is a schematic block diagram of the components
of the VMSM unit.

Fig. 8 is a flow diagram illustrating the difference
between paging in the virtual decor and paging
in the Multics decor.

Fig. 9 is a schematic circuit diagram of the apparatus
for controlling the execution by the central
processing unit to permit instructions.

Fig.10 is a schematic circuit diagram apparatus provid-
ing a final paging operation for the address
formation.

0107448

-4-

## INTRODUCTORY SUMMARY

The present system comprises a central processing unit that includes apparatus for providing a descriptor with a composite format for each of the descriptor formats of the individual operating systems, apparatus for generalized address formation encompassing address procedures of each of the individual operating systems, apparatus for permitting the addresses formulated to either limited to physical memory space allocated to individual operating systems or encompassing a predetermined physical memory space, and apparatus for identifying the operating system producing each instruction.  When an instruction is entered in the central processing unit, the descriptor associated with the instructor is converted into a composite format descriptor.  The central processing unit, including the addressing apparatus, is adapted to respond to the composition of the compsite format descriptor.  Similarly, apparatus is provided  to permit a generalized address formation in order that the addressing can be accomplished by using a minimum of special equipment.  Furthermore, the address apparatus is constructed to limit the physical memory space available to a particular operating system, but can be expanded so that the currently active operating system can have access to a predetermined portion of the available memory space.  Finally apparatus examining the instructions awaiting execution can permit execution of an instruction from a particular operating system, or can permit execution of instructions from a preselected group of operating systems.

-5-

DETAILED DESCRIPTION

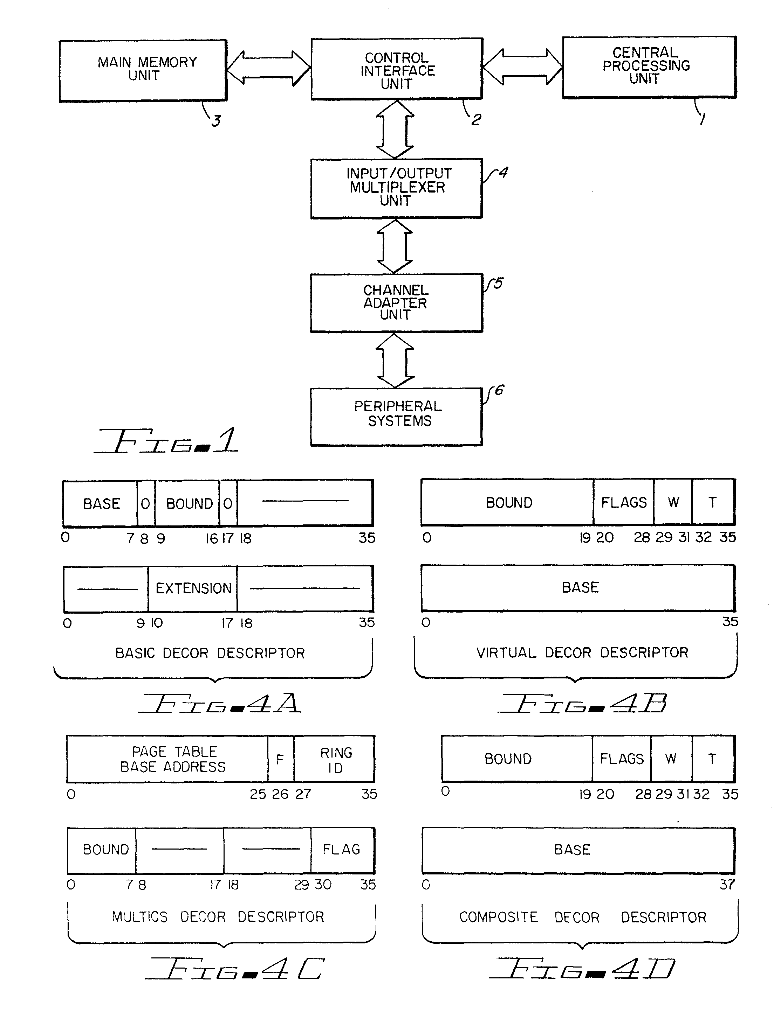

Figure 1 shows a central processing unit CPU 1, which is the principal portion of the data processing unit for the manipulation of information signal groups. The central processing unit includes a central unit for sequencing the entire unit and further includes a cache unit and an instruction unit. The cache unit obtains instructions from main memory unit 3 through the control interface unit 2. Instructions signal groups are retained in an instruction cache, operand signal groups in an operand cache and paging information in a paging buffer. The instruction unit stores prefetched instructions and other data in an instruction stack, which therefore contains the current instruction stream and together with prefetched alternative streams and indirect words predicted by the batch table. The instructions are decoded and operand or branch target instruction addresses generated in a pipeline which accepts instructions for an instruction stack. The final stage of the pipeline sends instructions and operands to one of a group of specialized execution units. The pipeline, address adder and instruction stack can be considered another logical execution unit, which handles transfer class instructions as well as instruction address, or state-related situations.

The main memory unit 3 provides the principal storage of data used by the central processing unit. The data is entered into to extracted from the main memory unit under control of the control interface unit 2.

The control interface unit 2 controls the transfer of data between the main memory unit 3, the input/output multiplexer 4 and the central processing unit 1. Thus, the control interface unit 2 prioritizes requests to the control interface unit and prioritizes the output to the input/output unit multiplexer. The control interface unit 2 provides a buffer unit for information signals transferred therethrough. In addition, the control interface unit 2 controls the queue for system interrupts under which words are stored in the main memory unit as well as other interrupt activity. The error detection and correction processes for data transferred into and out of the main memory unit 3 are contained in the control interface unit 2. The output interface unit also provides apparatus to insure that no block access conflict exists among hierarchy commands.

The input/ouput multiplexer 4 is utilized to satisfy the throughput requirements of the data processing system. The operating system prepares the required control words and assigns a buffer area for the data to be transferred. After the control words are prepared, the operating system initiates and input/output activity by issuing a connect instruction. The control interface unit 2 recognizes the connect instruction and passes the connect information to the input/output multiplexer controller. The input/output multiplexer retains the mailbox address and other pertinent information from the connect control word in the addressed channel's scratchpad memory and passes the connect command to the addressed channel in a channel adapter unit 5.

The addressed channel notifies the identified peripheral device that a channel program is waiting. After notification to the identified peripheral device, the channel adapter unit 5 requests the input/output mutliplexer to pull the channel mailbox. In response to this request, the input/output multiplexer loads the first eight words of the channel mailbox into scratchpad memory. The channel program subsequently requests the input/output multiplex to 'move pointer forward'. In response to this request, the input/output multiplex performs a list service and sends the Instruction Data Control Word (IDCW) to the channel adapter unit 5. The first DCW of the channel program must be an IDCW. The channel adapter unit passes the IDCW to the peripheral dvice and, on demand from the peripheral subsystem, requests a data list service. Using the List Pointer Word (LPW) from the channel mailbox, the input/output multiplex retrieves the next DCW. The input/output multiplexer retains the DCW in scratchpad memory and sends the pertinent information from the CDW to the channel adapter unit 5. With the DCW information, the channel adapter unit 5 requests the necessary data services to satisfy the channel program. The input/output multiplexer 4 executes the data services by maintaining the current DCW and PTW in scratchpad memory and performs any required list services for additional DCW's. After the channel program has been satisfied, the channel requests a status store service. The input/output multiplexer 4 places the termination status in the channel mailbox and restores the mailbox to memory. After completion of the status service, the channel requests a terminate interrupt service. In performing the service, the input/output multiplexer 4 interrogates the mailbox link word. If the interrupt inhibit bit is 'ON', the interrupt is not reported. If the interrupt inhibit bit is "OFF', the interrupt is reported using the interrupt level specified in the mailbox link word. If the link word specifies a continuation, the input/output multiplexer issues a connect to the channel.

The channel adapter unit 5 provides the interface between the input/output multiplexer 4 and the peripheral subsystem 6. In addition to the activity described in relation to the input/output multiplexer, the channel adapter interface unit provides a logic implementation conversion, CML in the input/output multiplexer 4 and TTL in the channel adapter unit 5. The channel adapter unit 4 serves as a buffer device between the peripheral system 6 and the input/output processor, permitting the input/output multiplexer to transfer information efficiently and asynchronously with a multiplicity of peripheral system 6.

The peripheral system 6 can be any typical subsystem such as magnetic tape units, disc storage unit, terminal interfaces, etc. The peripheral subsystems serve as mass storage devices and devices to provide external communication with the data processing system.

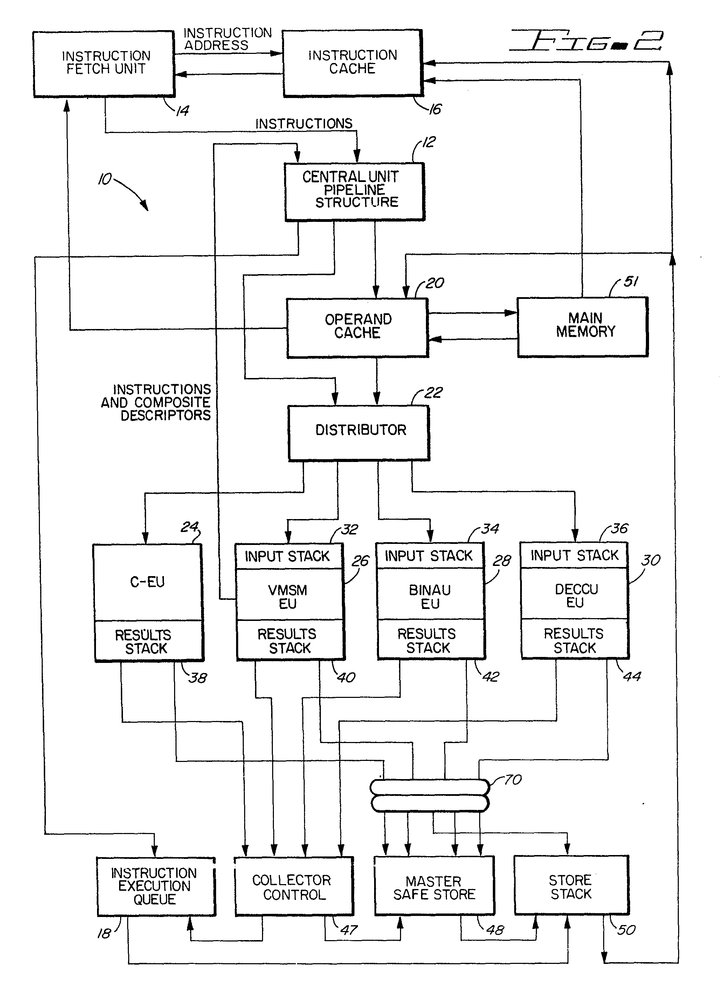

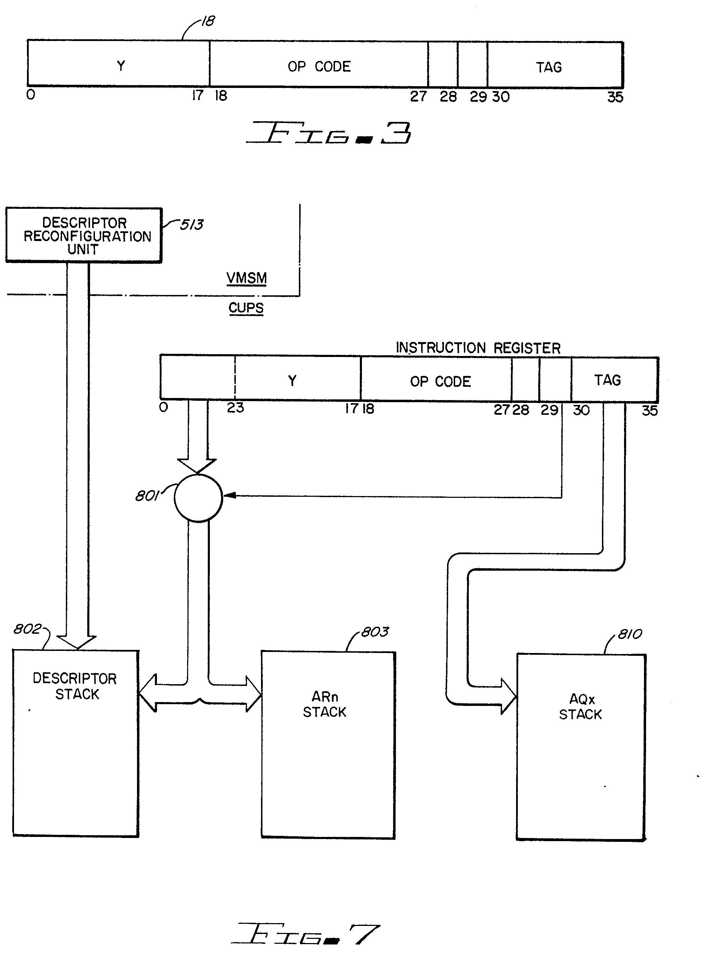

Figure 2 shows the major components (subsystems) of central processing unit 10 of a large-scale general-purpose digital computer. The central processing unit 10 can be an implementation of the central processing unit 1 of Fig. 1. The central pipeline unit 12 controls the overall operation of processing unit 10. The instruction fetch unit 14 supplies the address of instruction words to instruction cache 16. In response to the receipt of an instruction address by instruction cache 16 from instruction fetch unit 14, an instruction double word is transmitted from cache 16 to instruction fetch unit 14 which stores a series of instructions in an instruction stack which is a part of the instruction fetch unit 14. The central pipeline unit 12 obtains the instructions in program order from the instruction stack of instruction fetch unit (IFU) 14, perferably one per clock period of the system clock of processing unit 10. The central pipeline unit structure 12 is a 5-stage pipeline in which in the first stage the operation code, bit 18-27 of instruction word 18 (Figure 3), is decoded and formation of the operand's address is started using the 18 Y bits, bit 29, and the 6 TAG bits. In the second stage, the address formation is completed. In the third and fourth stages, the directory of operand cache 20 is searched for the operand, and the operand is accessed or obtained from the cache data storage. However, if the operand is not stored in the cache, then a block of eight words which contains the operand is fetched from main memory 51 and stored in the operand cache after sending the desired operand to the distributor. In the fifth stage, distributor 22 distributes the instructions and then operands to the appropriate execution units; the central execution unit CEU 24, the virtual memory and security manager VMSM 26, the binary arithmetic execution unit BINAU 30, or the decimal character unit DECCU 32. In addition, the instructions and other relevant information, as will be described hereafter, are transmitted in program order to the instruction execution queue 18.

Each of the execution units 24, 26, 28, 30 is capable of receiving instructions and operands and of processing them independently of the other execution units, and includes logic circuits which are optimized for performing the set of instructions assigned to it. General execution unit 24 performs basic computer operations, such as simple loads, adds, subtracts, etc., and certain miscellaneous instructions. Unit 24 is unique among the four execution units in that it executes each instruction as received, usually within one clock period. As a result, unit 24 is not provided with an input stack, as are the other execution units illustrated in Figure 2. The virtual memory and security manager unit 26 executes instructions relating to virtual memory, security and special instructions that are peculiar to a secure operating system. This unit also provides a composite descriptor for each descriptor provided to the central processing unit. The BINAU execution unit 28 executes binary arithmetic instructions, such as multiply, divide and floating point instructions. The decimal/character execution unit 30 executes alpha-numeric, decimal arithmetic, and bit string instructions. Execution units 26 have respective input stacks 32, 34 and 36; the function of these stacks is to the store the operation code and operands of the instruction awaiting execution by each input stack's associated execution unit.

Each of the input stacks 32, 34 and 36 is a conventional first-in, first-out stack having 16 levels, with each level storing a double data word. In addition, an execution code derived from the operation code of the instruction word to be performed or executed is stored with the operand in the input stack. The input stacks are FIFO (first-in, first-out) stacks, so that the first operation code and operand required for each operation code applied to a given execution unit is the first one read out of the input stack for execution by that unit. Each of the execution units 24,26, 28 and 30 also has a respective results stack 38, 40, 42 and 44. The results stacks are also conventional FIFO stacks, each of which has 16 levels. The result of the operation of an instruction are stored in the stacks in the order in which they are executed. Each level of a results stack stores a double word, plus additional information with respect to the double word. The operational code of each instruction word in execution, along with other information, is a part of an instruction execution queue word (IEQ) which is stored in the execution queue 18 which is a conventional FIFO stack of 16 levels.

An important feature of the central processing unit 10, from the standpoint of performance, is that both the operand cache 20 and the instruction cache 16, which together form a cache unit, and the main memory 51 perceive the address space as being composed of block of eight 36-bit words. Also data transfers between the main memory and the caches 20 and 16 are in units of eight such words or blocks. Movement of data within the processing unit 10, particularly between the cache units and the execution units, is on a double word basis and only the double word required is so moved. The distributor 22 supplies operands from the cache 20 to the various execution units and maintains multiple copies of the AQ register. The instruction fetch unit 14 consists of an instruction prefetch pipeline of five stages. Instruction fetch unit 14 stores prefetched instructions and data in its instruction stack. The instructions represent the current instruction stream and one or more prefetched alternative streams or indirect words predicted by the transfer/indirect prediction table of unit 14. The instruction fetch unit supplies instructions to the central pipeline unit 12. In central pipeline unit 12, instructions are decoded during the I, or instruction, cycle of central pipeline unit 12. Instruction prefetch pipeline 14 does not examine the instruction operation codes of instructions prefetched by it, but rather uses the instruction count of its instruction counter register to search the transfer and indirect prediction table to determine if a given instruction is a branch to a new memory location or is an instruction requiring indirect addressing.

The instruction prefetch pipeline provides the instruction execution pipeline 12 with a supply of instructions to be executed. This is accomplished by use of a transfer and indirect prediction table to predict new instruction sequences and then to prefetch the instructions of the new instruction stream, two words at a time, from the instruction cache or occasionally from the operand cache and placing such instructions or indirect words in the instruction stack. Loading such new instruction sequences into the prefetch instruction stack occurs only if the transfer/indirect prediction table indicates that one such instruction of each pair was a successful transfer, or required an indirect cycle the previous time the instruction was executed. When this occurs, instruction prefetch pipeline 14 diverts the current instruction sequence to fetch the target word of the transfer instruction or indirect instruction. Otherwise, the instruction prefetch pipeline continues sequentially fetching instructions and placing them it its instruction stack. The instruction prefetch pipeline of instruction fetch unit 14 also returns to sequential prefetching if the predicted transfer instruction turns out to be a nontransfer when the instruction in question is actually executed. The prefetched transfer or indirect targets are available for processing by the central unit pipeline structure 12 as soon as they are fetched and stored in the instruction stack of the instruction fetch unit 14. Thus, it is not necessary to wait for the actual execution of a transfer or indirect instruction by the central pipeline structure unit to be completed before IFU 14 starts placing instructions of the new instruction stream in the instruction stack of IFU 14. In this way, the effective execution time of transfer instructions and instructions with indirect operands is minimized.

The instruction prefetch pipeline operates in five cycles in a manner similar to the five cycles of the central pipeline unit 12. One difference is that IFU 14 disposes of instructions by placing them in its instruction stack a double-word pair at a time whereas CUPS 12 disposes of instructions one word at a time by forwarding them to central execution unit 24 or to the input stacks of the execution units 26, 28 and 30. Another difference is that IFU 14 checks with its transfer/indirect prediction table to determine if a transfer or indirect address is to be executed, whereas the central pipeline unit structure updates the transfer/indirect prediction table of IFU 14. During the first cycle or stage of the instruction prefetch pipeline of IFU 14, the instruction counter of central processing unit 10 is incremented by 2. During the second cycle, the address of an instruction pair is distributed to the transfer/indirect prediction table and the instruction/operand caches. During the third cycle, the transfer/indirect prediction table and instruction cache 16 are accessed. The instruction cache access consists of a set of 4 double words plus a physical page address denoting the physical system memory location associated with these double words. During the fourth cycle, the physical page address of the desired instruction pair is compared with the page address of each of the cache-accessed double words. If a match occurs, the double word associated with the match is selected as the instruction double word. If no match occurs, the operand cache is searched for the instruction double word. If the instruction double word is found neither in the I cache nor the O cache, an 8-word block containing the desired instruction double word is fetched from the main memory 10 and placed in the instruction cache.

The transfer/indirect prediction table is accessed in order to see if either or both of the instructions being accessed is predicted to be a transfer/go instruction during the compare/select or fourth cycle. The instruction pair is selected from one of the four cache levels corresponding to a match of the real page number from the directory of the current instruction stream. The instruction pair read out of the cache is saved in an instruction fetch register, the real page number is saved, and the response from the transfer/indirect prediction table is checked to see if either of the instructions is recorded in the transfer/indirect prediction table as a transfer/go. Note that the response from the transfer/indirect prediction table arrives two cycles after it is interrogated. During the execution cycle, the fifth cycle of the prefetch instruction pipeline, the instruction pair is place in the instruction stack so that, if the transfer/indirect prediction table indicates that either of the instructions is a transfer, the instruction prefetch pipeline will prepare to fetch instructions from the new instruction stream. The timing is such that up to two extra double-word pairs from the current instruction stream will also be read from the cache. In the event the predicted transfer/go turns out to be a no go, the extra double-word pairs are still available in the instruction stack. Pointers associated with the instruction stack enable central instruction prefetch unit 12 to read instructions out of the instruction stack in the correct sequence (in progam order).

The instruction stack functions as an instruction queue between instruction prefetch unit 14 and the instruction execution unit or central unit pipeline structure 12, and is 15 levels deep. Once instructions or indirect words are placed in the instruction stack by the instruction fetch unit pipeline structure, they remain until they are executed or until it is determined that they are not to be executed. In the case of a transfer instruction or instructions requiring an indirect word for which a history is found in the transfer/indirect prediction table during prefetch, the instruction stack control contains a pointer to the instruction stack location holding the address of the target instruction, or the indirect word. The instruction stack is a cyclic (round-robin) stack. There is a sixteenth entry which is used to buffer instruction double-word pairs. Instructions and indirect words or operands flow from the instruction stack of IFU 14 to the central pipline unit structure 12 through the base instruction register of central unit 12 a single word at a time.

Central pipeline unit 12 also has five stages or cycles. In the first, the operation code of the instruction is decoded and formation of the operand address is started; in the second, the operand address is completed; in the third, the address is converted from a virtual memory address space representation to the actual physical address space representation, and a set of candidate operands is accessed from the operand cache along with the physical page number identifying the system memory location from which each of the operand candidates was accessed; in the fourth, the operand page number portion of the physical address is compared with the page number associated with each of cache accessed operand candidates and assuming there is a match; in the fifth, the selected operand and execution command code is transmitted to the execution unit uniquely capable of performing the instruction. It should be mentioned that some of the activities carried out are skewed across the pipeline stages as defined. It is the central pipeline unit structure 12 that makes entries into the transfer/indirect prediction table of IFU 14. Whenever the central pipeline unit structure executes a transfer-go instruction, it verifies any corresponding entry which may be in the transfer/indirect prediction table. If a predicted transfer turns out to be a no-go or nontransfer, then that entry in the TIP table is deleted. In the case of an impure procedure, for example, the target address of the transfer instruction has been modified, but the operational code still remains a transfer; the appropriate entry in the transfer/indirect prediction table is corrected to reflect this fact. In the event of a transfer-go not previously recorded, a new entry is made in the TIP table which may displace another entry should all four levels corresponding to the instruction counter for that particular instruction be occupied. The displacement algorithm is random since there is little benefit in adding the necessary complex circuitry to displace the least recently used entry because of the infrequency of transfer/indirect prediction table misses. The central unit interacts with the transfer/indirect prediction table in other ways. In the case of impure procedure where the operation code is changed but the transfer/direct prediction table still predicts a transfer, the central pipeline unit structure 12 will detect the fact in the instruction cycle where the instruction is first decoded. In the case of indirect instructions, the central pipeline unit structure 12 also makes an entry into the transfer/indirect prediction table for these. The instruction execution pipeline 12 has the critical role in central processing unit 10 in achieving the necessary high levels of performance as any interruptions due to data not being in the cache unit, unexpected transfers, etc., will halt the operation of the central pipeline unit until such occurrences are remedied.

The transfer/indirect prediction table consists of 4,096 entries which are divided into 1,024 sets of four entries each. The TIP table serves to record the target address for the first level of indirection and also to predict the target address for both conditional and unconditional transfers. During the first execution of a transfer-go instruction or an instruction requiring an indirect word, there will be a break in the pipeline of the central pipeline structure, while the target address is formed and the target accessed from the cache. On the first execution, information is prepared for the transfer/indirect prediction table defining the location of the target instruction in the cache unit. During the next prefetch of the transfer instruction or instruction requiring an indirect word, the prefetch pipeline accesses the transfer/indirect prediction table and determines the target location in order to also prefetch the alternative instruction stream or indirect word. Checking the transfer or indirect instruction occupies only one clock period of the central pipeline unit in order to verify that the prefetch target address has not changed. During subsequent executions of any transfer instruction, the transfer/indirect prediction table entry is updated only if the transfer does not go as expected. The transfer/indirect prediction table keeps track of only one level of indirection. The cache addresses of indirect words are put in the TIP table only if the indirect words are not modified.

The cache unit consists of two separate 8K caches, instruction cache 16 and operand cache 20. Data is maintained in each cache on an eight-word block basis. A block consists of eight consecutive 36-bit main memory words, the first word of which has an address ending in binary 000. A reference to any word in a block causes the entire block to be ready from main memory, unless the block is already in the appropriate cache. Any block in a cache is retained until it is displaced by another block or until it is cleared from the cache by a cache clearing instruction. The instruction cache 16 holds blocks of unmodified instructions and indirect words, while the operand cache holds blocks of operands, modified instructions and indirect words. Operand data cannot be fetched from the instructions cache nor can data be modified in the instruction cache. It is, however, possible to fetch instructions from the operand cache, but the normal and desired mode of operation is to fetch instructions from the instruction cache only. If a block which is contained in the instruction cache is referenced for a store or data fetch operation, that block is cleared from the instruction cache and refetched from main memory 51 and placed in the operand cache 20. In summary, operands are fetched only from the operand cache and they may be stored only into the operand cache. Instructions may be fetched from either cache, but there is a performance preference for the instruction cache.

Each cache has a four-level set associate directory for the accompanying storage for 8K 36-bit words. Each cache is organized as 256 rows of four 8-word blocks. The first eight words of physical memory map onto the first row of the cache, row 0. Words 8 to 15 on the second row, row 1, with words 2,040 to 2,047 mapping onto the last row, row 255. Each successive 2K of physical memory maps onto the cache in a similar manner. Hence, the cache row number of an eight-word block is known from its physical memory address. Since each row has space for four 8-word blocks, in four levels, the levels for a particular row in a given cache unit will be filled before there is a contention for space in that row. After all levels in the row have been filled, older blocks in the row are displaced on a least recently used basis. Thus, five hits to the same row are required before an incoming block of eight words can displace a prior block of eight. If an eight-word block of instructions is in the operand cache, instruction prefetch unit 14 can fetch the instructions from the operand cache a double-word pair at a time, but without removing them from the operand cache. Usually, the instruction prefetch unit 14 runs far ahead of the instruction execution pipeline of the central pipeline unit structure 12, so this penalty is not always visible, but such a situation can cause an instruction prefetch pipeline to fall behind, in which case the lack of the proper instruction will result in a break in the pipeline of the central pipeline unit structure. Performance is enhanced by a store into cache as distinguished from a store through cache. All store operations go to the operand cache, but do not immediately go to main memory 51, although displacing the block in which the store occurred will force the writing of that block to main memory 51 (i.e. main memory unit 8 in Figure 1). If the block being stored into is already in the operand cache and control information indicates that the eight-word block has already been modified, then the store is completed to the operand cache and no further action is taken. However, if the block is found in the operand cache, but has not yet been modified, central processing unit 10 notifies the control interface unit 2 associated with that block that the block is being modified. The control interface unit then issues a write notification to any other central processor units which may be present. These must then invalidate any copies of the eight-word block which they might have either in their operand cache or conceivably in their instruction cache.

When a data block is not found in the operand cache on a store operation, the block is fetched from memory. Central processing unit 10 indicates to the control interface unit 2 that the fetch is for the purpose of modifying the block so that, when the processor receives the block, the block can be modified without any further communication between units. Only read cache misses cause the pipeline of the central pipeline unit structure to wait for data. On store cache misses, the pipeline continues without waiting for data.

Each cache has a duplicate directory, so that, when a system request is recieved to either clear a block or to transmit a block to system memory, the processor can search its duplicate cache directory to determine if the block is present without interfering with the operation of the central pipeline unit 12. If the requested block is found, then the processor takes the appropriate action. Otherwise, the duplicate directory responds to the request and the processor is not delayed.

The central unit pipeline structure 12 forwards the operation code of each instruction as it is received, in program order, to the instruction execution queue 18 for storage therein. Up to sixteen instruction execution queue IEQ words can be stored in queue 18. Collector control 47 uses the operation code of each IEQ word to control the reading out of the results located or stored in the results stacks 38,40,42 and 44 of each of the execution units 24, 26, 28 and 30, so that the results in proper program order can be stored in either the master safe store MSS 48 or into store stack 50. Results that are stored in store stack 50 are for writes of operands to memory. Instructions which change program addressable registers of central processing unit 10 generate results that are stored in the master safe store 48 so that at such time as an interrupt, a fault or a hardware error occurs, the contents of the program addressable registers of the central processing unit 10 are available in master safe store 48. The availability of current and valid contents of all program addressable registers greatly facilitates fault recovery, handling of interrupts, and retrying of instructions as appropriate. The main memory 51 of the data processing system of which the central processing unit 10 is a subsystem provides instructions for the instruction cache 16 and operands for operand cache 20. All stores or writes to main memory 51 are from data stored in the operand cache 20. Thus, whenever data is to be written into memory as a result of an execution of an instruction, the necessary data, operands, are stored in store stack 50 in program order and are issued or written into the operand cache 20 in program order. As a block of operand cache 20 is released so that new data can be written into that block, the operand cache control will have data in that block of cache written into main memory 51 before new data is written into that block.

The central pipeline unit 12 controls the overall operation of processing unit 10 and has the function of sending operation codes or commands and associated operands to the various execution units 24, 26, 28 and 30, where the actual execution of each operand code is performed. Instruction fetch unit 14, under the control of the central pipeline unit 12, fetches instructions primarily from the instruction cache 16 and loads up to sixteen pairs of instructions in an instruction stack which is a part of unit 14. The central pipeline unit structure 12 obtains the instructions from the instruction stack of the instruction prefetch unit. The central pipeline unit 12 prepares the addresses of the operands in a series of sequence of five steps from the operand cache and sends the operation code and the operands to whichever one of the execution units 24, 26, 28 or 30 is capable of executing it. Within the central pipeline unit structure 12 is performed the instruction preprocessing, instruction decode, operand address formation, including paging and search of an associative memory of the operand cache.

The execution units 24, 26, 28 and 30 receive commands from the central pipeline unit 12 and operands from the operand cache 20 which are distributed by distributor 22 to the various execution units. The execution of an instruction generally involves the formation of some result based upon current register contents and the input operand which produces a change to a program visible register or to memory.

Central processing unit 10 is provided with four major execution units, each of which is made up of one or more subunits. These units are the central execution unit 24, the binary arithmetic unit which performs floating point and multiply and divide instructions BINAU 28, the decimal character unit DECCU 30, and the virtual memory and security manager unit VMSM 26. Each of the execution units 24, 26, 28 and 30 receives instructions and operands, and then processes them independently of what any of the other execution units may be doing. Execution units 26 and 28 have respective input stacks 32 and 24, each of 16 levels with each level capable of holding one would word. Execution unit 30 has two sixteen-level stacks 36, each capable of holding one double word.

In addition, each execution unit has an associated command stack. Execution units 26 and 28 can hold up to 16 commands awaiting execution while execution units 30 can hold up to 4 commands awaiting execution. It should be noted that the decision as to which execution unit received or is assigned a given instruction and its associated operand is determined by the central pipeline unit 12 by examining the code of each instruction by a conventional table lookup technique. Input stacks 32, 34 and 36 allow the central pipeline unit structure 12 to issue operands and associated operation codes to the execution units at a maximum rate of one per clock period, without waiting for the completion of the execution of preceding multiple execution cycle instructions, for example. Such an arrangement also allows execution of instructions in the different execution units to be overlapped. Each instruction code is alwyas executed in the order it is received from the central pipeline unit 12.

The system architecture of processing unit 10, having several execution units, requires that several copies of the major registers, for example the A and the Q, be kept. As processing proceeds, the valid copy of a particular register may be in any one of the execution units or in any of several different register banks within processing unit 10. Central pipeline unit structure 12 maintains a record of the currently valid copy for each register and recognizes when the execution of the next instruction requires transferring a copy of the contents of a register from one execution unit to another. However, maintaining a valid copy of the contents of a particular register is complicated by the length of pipeline 12, which is five instruction or clock periods deep. The ability to determine the contents of each addressable register immediately prior to the occurrence of a fault is a requirement for prompt recovery from a fault.

In any pipeline computer, processing of any one instruction is overlapped with the processing of several other instructions in different stages of execution. In addition, in central processing unit 10 several instructions may simultaneously be executed in different execution units. As a result, at any one time, the registers of pipeline 12 and of execution units 24, 26, 28 and 30 can contain register changes resulting from the processing and, execution of several different instruction codes. When an instruction program fault, an instruction processing error, or an interrupt occurs, the collectting apparatus (units 38,40,42, 44, 70,18, 47, 48 and 50) must be halted at the end of the last successfully completed instruction. All register changes as a result of the execution in program order of instructions prior to the fault, error, or interrupt should be completed and any program visible register change or changes to memory as a result of execution of later in program order instructions must be cancelled or deleted.

The collecting apparatus provides a valid, current copy of each of the programm addressable registers to facilitate fault and error recovery and for handling interrupts. A record of the proper program order for all instructions in execution being processed by central processing unit 10 is maintained in instruction execution queue 18. Instruction execution 18 contains one entry for every instruction in process. Entries into the master safe store 48 and into store stack 50 are ordered so that they are unloaded in proper program order, i.e. the same order or sequence in which the instructions are stored into the instruction execution stack 18 by the central pipeline unit's distributor 22. The instruction execution queue words contain the operation code of the instruction and identify by means of a table lookup technique the execution results stack which will contain the result of that instruction when it is executed. The result ofeach instruction executed is then transferred from the appropriate results stack to mater safe store 48 or to store stack 50 in program order. Thus, in the collecting apparatus, instructions are completed and the results of each are received and arranged in the proper or program order. The collecting apparatus also performs the actual execution of all memory store instructions. Master safe store 48 contains a copy of all program visible registers so that it is a convenient place to obtain the contents of program visible registers which are to be written into memory. Handling store instructions in the collecting apparatus with the data to be written into memory 51 coming from either master safe store 48 or the execution unit's result stacks via store stack 50 maintains program order and avoids the necessity for the execution units 24, 26, 28 and 30 from being involved in store instructions. Thus, in this sense, the collecting apparatus is another execution unit for processing store instructions. As a result, simple stores can be overlapped with the execution of other instructions taken two or more clock periods. The information stored in the master safe store 48 makes it relatively easy for the central processing unit 10 to retry hardware instructions where deemed necessary.

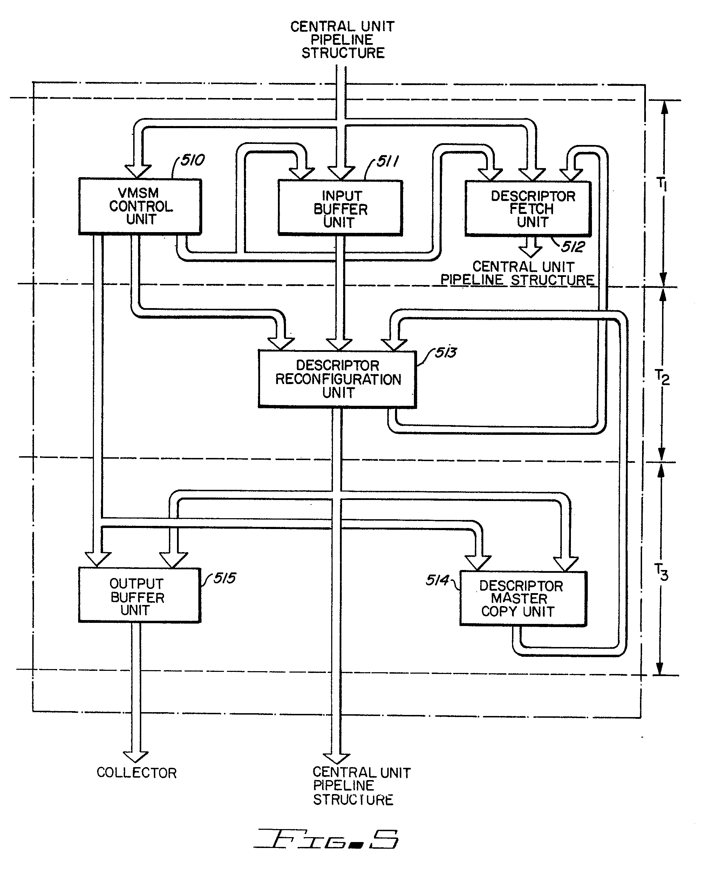

Figure 4A, 4B, 4Cand 4D show examples of descriptors used by various operating systems as well as the composite decor descriptor. The descriptor for the basic decor is shown in Fig. 4A. This descriptor includes two 36-bit data fields. In the first data field, bits 0-7 represent a base number, bit 9-16 represent a bound number and the remaining bits are not relevant to this discussion. In the second data field bits 10-17 are the extension number and the remaining bit positions are not relevant to this discussion. Fig. 4B shows the virtual decor descriptor including two 36-bit fields. In the first 36 bits, bits 0-9 represent the bound, bits 20-28 represent flags, bits 29-31 are the working space register (WSR) and bits 32-35 are the type of descriptor. In the second 36 bit field, all bits are used to represent a base address. In Fig.4C, the Multics decor descriptor is represented by two 36-bit fields. In field one, bits 0-25 are the page table base address, bit 26 is a flag and bits 27-35 have ring-access information. In the second field, bits 0-7 represent the bound, bits 30-35 represent flags and the remaining bit positions are not relevant.

0107448

-25-

In Fig. 4D, the composite decor descriptor produced by
the VMSM unit includes a 36-bit field and a 38-bit field.
In the first field bits 0-19 are a bound number, bits
20-28 are flags, bits 29-31 are a working space register
and bits 32-25 are a type of descriptor identification.
In this second field, the entire 38 bit field is available
for a base address.

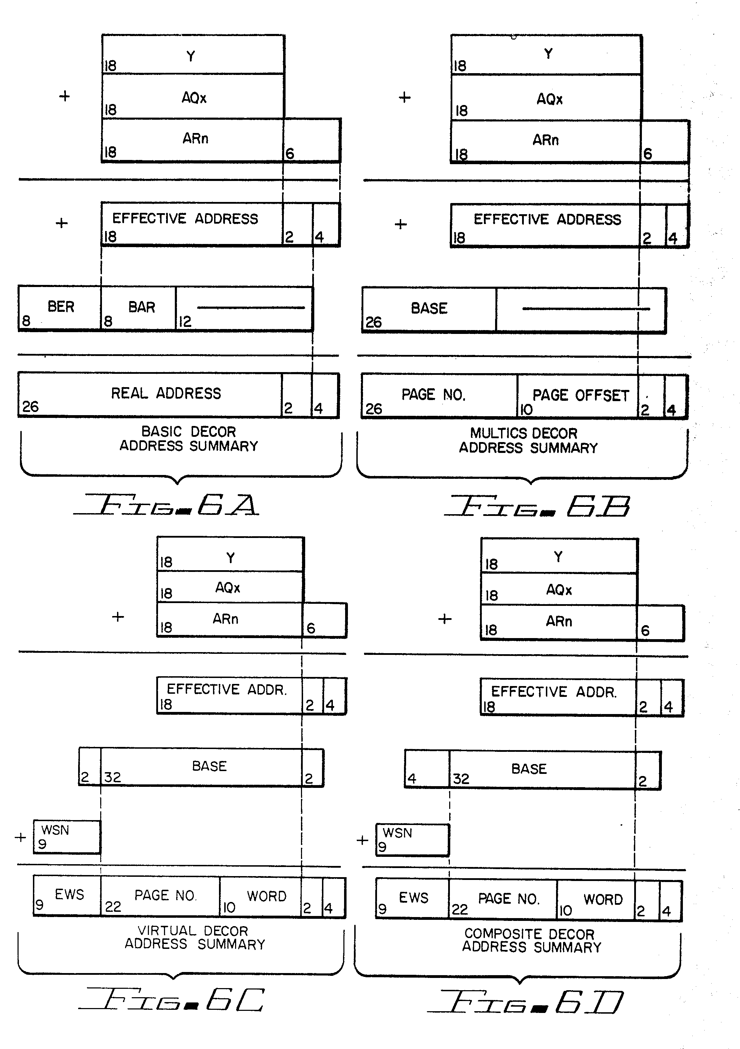

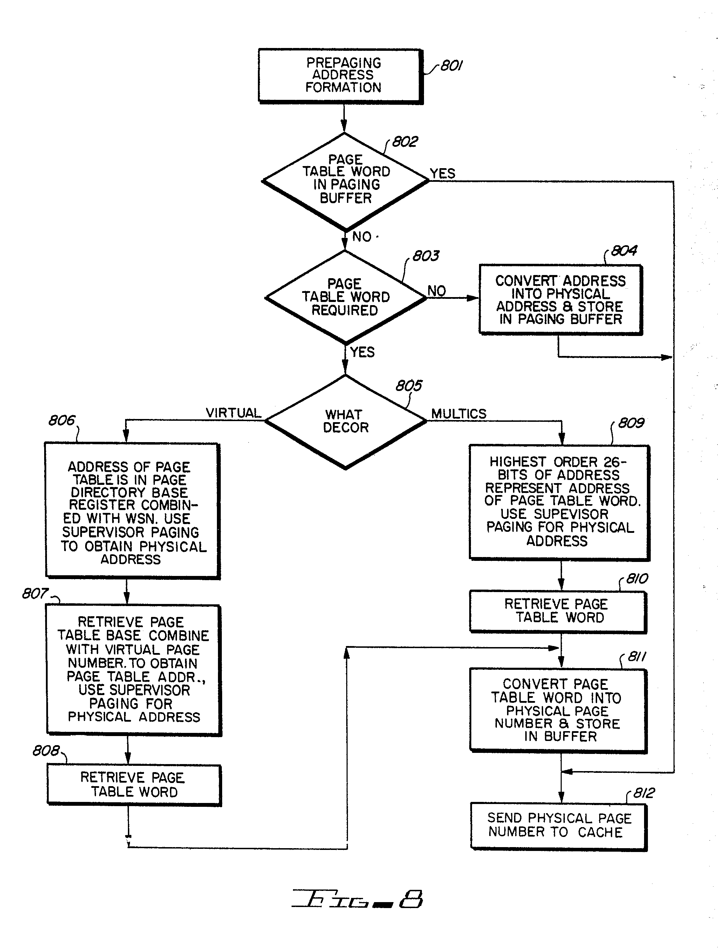

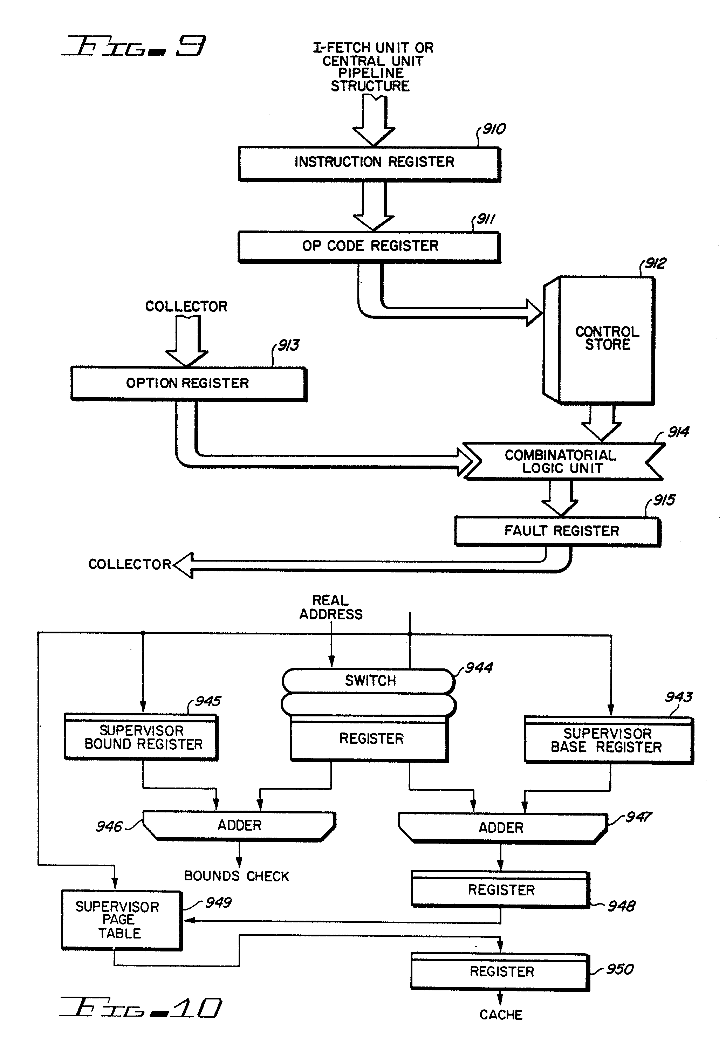

Fig. 5 is a block diagram of the VMSM unit. A
double word of 2 x 36 bits (plus parity) is transferred
from the central unit pipeline structure to the VMSM unit
and applied to the input buffer unit 511 and the descriptor
fetch unit 512. The input buffer unit 511 consists of a
FIFO stack with 16 locations to synchronize the operation
of the VMSM unit with the execution speed of the central
unit pipeline structure. A 14-bit execution code is
transferred from the central unit pipeline structure to
the VMSM unit and applied to the VMSM control unit 50,
which analyzes this execution code. In general, three
types of operands can be received by the VMSM unit; a
descriptor, or a pointer to a descriptor, or a descriptor
position update operand - this type of operand is uniquely
determined by this given execution code. If a pointer to
a descriptor is identified, the control unit 510 informs
the descriptor fetch unit 512. The descriptor fetch unit,
in response to the double word pointer and the signals from
the control unit, creates a read instruction, and sends this
instruction to the central unit pipeline structure to bring
the descriptor referenced by the pointer to the VMSM unit.
When the double word entering the VMSM unit is a descriptor
the control unit 510 analyzes the execution code to determine
to which operating system the descriptor belongs. Having
determined the decor to which the descriptor belongs, the
control unit 510 adjusts the logic in the descriptor
reconfiguration unit 513 in a manner determined by that
decor. The original descriptor is thereafter reformatted
into the composite descriptor format and applied directly to
the addressing apparatus in the central unit pipeline structure (Fig. 8). After formation of the composite descriptor, the control unit 510 adjusts the logic in the descriptor reconfiguration unit 513 to generate the unformatted or decor-dependent descriptor. This generation of the unformatted descriptor is required to maintain the program-visible data formats associated with the descriptors. This unformatted descriptor generated by the descriptor reconfiguration unit 513 is then simultaneously applied to the output buffer unit 515 and the descriptor master copy unit 514. The output buffer unit 515 includes a FIFO stack for providing for the non-synchronous operation of the components of the remainder of the central processing unit with the VMSM unit. The unformatted descriptor is then transferred to the collector for distribution to the data processing system. The descriptor master copy unit 514 is a content-addressable register bank containing a local copy of all the program-visible descriptor registers for use in the descriptor reconfiguration unit 513 of the VMSM. When a position update of the descriptor stack is identified, the descriptor master copy unit 514, which includes a copy of each descriptor, will be accessed and the described descriptor will be extracted and applied to the descriptor reconfiguration unit 513. The control unit 510 will have been informed of the request to update and will have prepared the combinatorial logic of the descriptor reconfiguration unit. The descriptor extracted from the descriptor master copy unit 514 will first be reformatted into the composite descriptor format and applied to the central unit pipeline structure addressing apparatus (see Fig. 8). The logic in the descriptor reconfiguration unit 513 is then adjusted and the unformatted descriptor is produced. The descriptor is then applied to the output buffer unit 515 and the descriptor master copy unit 514 as previously described. The update descriptor will be transferred to the output buffer unit 515 for transfer to the collector. In addition to controlling the combinatorial logic, the control unit 510 controls the apparatus sequencing, stack addressing the appropriate switch positions for sequencing of the pipeline operation of the VMSM unit as indicated by time intervals $T_1$, $T_2$, and $T_3$.

Fig. 6A, 6B, 6C and 6D show a comparison of the address formation of the basic decor, Multics decor, virtual decor and the composite decor. In each decor, the initial address function is to obtain an intermediate address (referred to as the effective address) including the combination of the Y field from the instruction word, the AQX register determined by the tag field of the instruction word and the ARn register determined by the three most significant bits of the Y field of the instruction word. The next step is to provide an intermediate address, referred to as the virtual address. Referring to Fig. 6A, the virtual address is formed by combining the effective address with a BAR field (obtained from the descriptor base field) and the BER field (obtained from the extension field of the descriptor) (see Fig. 4A). Referring to Fig. 6B, the Multics decor address is formed by combining the effective address with a base field from the Multics decriptor base field (see Fig. 4C). The virtual address includes a page number and a page offset. Referring to Fig. 6C, the virtual address is formed in the virtual decor by combining base field (from the descriptor base field) and the working space number with the effective address. The virtual address includes an effective working space (EWS) field, a page number field and a word field. In Fig. 6D, the virtual address for the composite decor address formation is obtained by combining the effective address with the base field (obtained from the descriptor base field) and a working space number. The virtual address of the composite decor includes an effective working space field (EWS), a page number field and a word number field. The virtual address of the Multics, virtual and composite decors are all paged to obtain a real address. For the basic decor, the virtual address is the same as the real address. In addition, the page operation is performed on the real address to obtain the physical address, i.e., the address in the physical storage address space of the memory.

Fig. 7 is a schematic diagram of the components for virtual address formation. Instruction register 818 contains the Y address field. The highest order three bits of the Y address field are used to address a sixteen level descriptor stack 802 previously loaded with composite descriptors loaded from the VMSM and an eight level ARn stack 803. Bit 29 of the instruction word controls gate 801 to determine if the two stacks are actually addressed. Similarly bits 30-35 of the instruction word, the tag field, control the accessing of the AQX 810 stack. The OP CODE contained in the field of bits 18-27 determine how the various fields will be combined to form the address. This figure illustrates the position of the descriptor stack for which the VMSM unit contains the descriptor master copy stack 626.

Each time that a descriptor is extracted from the main memory unit 3 and transferred to the central processing unit 1, the descriptor is reformatted by the VMSM unit into a composite descriptor format. In this manner, the data needed for address formation can be identified when it is needed. For example, the base address in the composite format is always in the same location. Therefore apparatus is not needed for each addressing scheme, but a composite addressing mechanism, encompassing all descriptor formats is possible. Similarly other control attributes normally found in the descriptors, such as flags, can find a standard position in the composition descriptor, allowing a composite apparatus as distinguished from a decor- dependent apparatus to be used.

Various decors typically have variations in the way that the address formation is handled. An example of how possible variations are handled in the present system is shown in Figure 8. Referring to Step 801 a prepaging address acivity has been performed. A decision must be made, Step 802, as to whether the page table word is in the page table buffer. If the page table word is not in the page table buffer, then the Step 803 determines if a page table word is required. If the page table word is not required, then the address that has been formed is now converted into a physical address by using a supervisor paging technique, and stored in the paging buffer. In the present apparatus, the physical address is kept in the page table work buffer so that the paging process will not be required a second time when the page table word is referenced. Therefore, in Step 802, if the page table word was in the buffer then this address is already the physical address and it can be transferred to the cache for retrieval of the data from the indicated physical memory location. If the page table word is required, then Step 805 determines to which decor the instruction belongs. In the present example, paging in the Multics decor is a one-step process while paging in the virtual decor is a two-step process. In the Multics decor, after a determination has been made that this is a Multics decor address, then Step 809 accesses the highes order 26 bits of the address to represent an address of the page table word. However, to obtain the physical address, the supervisor paging must be performed. In Step 810, the page table word is retrieved from that memory and in Step 811, the page table word is converted to the physical address and stored in the buffer for future reference. The physical address is then sent to the cache for retrieval of data at the indicated location. In the virtual decor mode, Step 806 involves the address of the page table base which is formed by a combination of a quantity in the page directory base register and the use of the working space number. After these numbers are combined, the supervisor paging is used to obtain the physical address. In Step 807, the quantity in the physical address, identified in Step 806, is retrieved from the page table base and is combined with the virtual page number to obtain a page table word. To obtain the physical address designated by this quantity the supervisor paging technique is used. In Step 808, the page table word is retrieved from memory at the physical address formed from Step 807 and in Step 811, the page table word is converted to a physical address and stored in the page table buffer. The physical address is also sent to the cache for retrieval of the quantity at the indicated memory location in Step 812. Note, however, that in distinguishing the virtual decor address format and the Multics address formation in the paging mode, the only additional equipment that must be utilized in the present system is the page directory base register which provides the second level of paging in the virtual decor.

Figure 9 shows the apparatus by which the instruction associated with the currently active operating system is identified and a determination is made of execution of the instruction is permitted. An instruction is loaded into the instruction register 910 from either the I fetch unit or from the central unit pipeline structure. The portion of this instruction that is devoted to the operation code (OP CODE) is loaded into an OP CODE register 911. The OP CODE register addresses the control store 912 which is composed of a RAM memory. At each location in the control store is a three bit number that designates the operating system or systems permitted to execute the OP code instruction. It will be clear that there are overlapping areas between the instruction sets associated with the instruction repertoire of the various operating systems. However, the data in the control stores can be coded to take account of this overlap. Previously, and when the currently active operating system parameters are initialized in the central processing unit, the option register 913 is loaded from the collector. The output of the option register is coupled to combinatorial logic unit 914. The purpose of the combinatorial logic unit is to ensure that the operating system or systems permitting execution of the instruction (in the instruction register) are the same as the operating system identified by the signals located in the designated portion of the option register. When the information in the option register and the information from the address location in the control store are not identical, a fault is registered in fault register 915, which feeds the collector. In the collector the usual fault procedures are followed upon receipt of a fault condition.

Figure 10 shows the apparatus used to separate the physical memory allocated to the various operating systems. During initialization of the operating system currently active in the data processing system, data is entered into supervisor bound register 945 and the supervisor base register 943. In addition, the supervisor page table is provided with the various physical address locations assigned to the various operating systems. During the actual address formation the real address is applied to switch/register combination 944. The contents of this register and the contents of supervisor bound register 945 are combined to ensure that the resulting address does not exceed the limits allocated to the operating system. The real address contained in 941 is also combined in adder 947 with the data in the supervisor base register 943. The resulting address is applied to the supervisor page table directory 949. Basically, the number quantity in register 944 provides an offset to the base address provided by the supervisor base register. The address location in 949 is then stored in register 950 and is directed, along with the lower order address bit signals that are not required to identify the page, to the cache memory for operation on the physical memory location indicated by the formed address.

## CLAIMS

1. In a data processing unit having a plurality of operating systems associated therewith, each of which requires a different decor, a central processing unit for executing instructions of said plurality of operating systems, **characterized by**:

   means (fig. 5) responsive to transfer of descriptors related to each operating system for providing a composite descriptor;
   addressing means (fig. 6) responsive to the instructions and the composite descriptor for providing address formation compatible with each operating system;
   paging means (fig. 10) coupled to the addressing means for limiting access of a currently active system to preassigned portions of the memory unit; and
   means (fig. 9) responsive to each instruction for determining if it is permitted with the currently active operating system and signalling to the central processing unit when a unpermitted instruction is identified.

2. A central processing unit according to Claim 1, characterized in that the paging means can permit access to all of the memory unit, and the instruction responsive means can permit execution of instruction associated with any number or all of the operating systems.

1/7

0107448

Fig-1

BASIC DECOR DESCRIPTOR

Fig-4A

VIRTUAL DECOR DESCRIPTOR

Fig-4B

MULTICS DECOR DESCRIPTOR

Fig-4C

COMPOSITE DECOR DESCRIPTOR

Fig-4D

0107448

Fig. 2

0107448

| Y | | OP CODE | | | | TAG |
|---|---|---|---|---|---|---|
| 0 | 17 18 | | 27 | 28 | 29 30 | 35 |

$\mathcal{F}\mathcal{I}\mathcal{G}$-3

DESCRIPTOR
RECONFIGURATION
UNIT — 513

VMSM
─────────
CUPS

INSTRUCTION REGISTER

| | Y | | OP CODE | | | | TAG | |
|---|---|---|---|---|---|---|---|---|
| 0 | 23 | 17 18 | | 27 28 | 29 | 30 | | 35 |

801

802 — DESCRIPTOR STACK

803 — ARn STACK

810 — AQx STACK

$\mathcal{F}\mathcal{I}\mathcal{G}$-7

CENTRAL UNIT
PIPELINE
STRUCTURE

| | | |
|---|---|---|
| *510* VMSM CONTROL UNIT | *511* INPUT BUFFER UNIT | DESCRIPTOR FETCH UNIT |

*512* CENTRAL UNIT
PIPELINE STRUCTURE

*513* DESCRIPTOR RECONFIGURATION UNIT

*515* OUTPUT BUFFER UNIT

*514* DESCRIPTOR MASTER COPY UNIT

$T_1$

$T_2$

$T_3$

COLLECTOR

CENTRAL UNIT
PIPELINE
STRUCTURE

**FIG. 5**

5/7

0107448

**FIG. 6A** — BASIC DECOR ADDRESS SUMMARY

**FIG. 6B** — MULTICS DECOR ADDRESS SUMMARY

**FIG. 6C** — VIRTUAL DECOR ADDRESS SUMMARY

**FIG. 6D** — COMPOSITE DECOR ADDRESS SUMMARY

6/7

0107448

**PREPAGING ADDRESS FORMATION** — 801

**PAGE TABLE WORD IN PAGING BUFFER** — 802

- YES →
- NO →

**PAGE TABLE WORD REQUIRED** — 803

- NO → **CONVERT ADDRESS INTO PHYSICAL ADDRESS & STORE IN PAGING BUFFER** — 804
- YES →

**WHAT DECOR** — 805

- VIRTUAL →
- MULTICS →

**ADDRESS OF PAGE TABLE IS IN PAGE DIRECTORY BASE REGISTER COMBINED WITH WSN. USE SUPERVISOR PAGING TO OBTAIN PHYSICAL ADDRESS** — 806

**RETRIEVE PAGE TABLE BASE COMBINE WITH VIRTUAL PAGE NUMBER. TO OBTAIN PAGE TABLE ADDR., USE SUPERVISOR PAGING FOR PHYSICAL ADDRESS** — 807

**RETRIEVE PAGE TABLE WORD** — 808

**HIGHEST ORDER 26-BITS OF ADDRESS REPRESENT ADDRESS OF PAGE TABLE WORD. USE SUPEVISOR PAGING FOR PHYSICAL ADDRESS** — 809

**RETRIEVE PAGE TABLE WORD** — 810

**CONVERT PAGE TABLE WORD INTO PHYSICAL PAGE NUMBER & STORE IN BUFFER** — 811

**SEND PHYSICAL PAGE NUMBER TO CACHE** — 812

*Fig_8*

0107448

Fig. 9

I-FETCH UNIT OR
CENTRAL UNIT
PIPELINE
STRUCTURE

910
INSTRUCTION REGISTER

911
OP CODE REGISTER

COLLECTOR

913
OPTION REGISTER

912
CONTROL STORE

914
COMBINATORIAL LOGIC UNIT

915
FAULT REGISTER

COLLECTOR

REAL ADDRESS

944
SWITCH

REGISTER

945
SUPERVISOR BOUND REGISTER

943
SUPERVISOR BASE REGISTER

946
ADDER

947
ADDER

BOUNDS CHECK

948
REGISTER

949
SUPERVISOR PAGE TABLE

950
REGISTER

CACHE

Fig. 10